# EUROPEAN PATENT SPECIFICATION

(11) **EP 1 228 953 B1**
(45) Date of publication and mention of the grant of the patent: **17.01.2007**
(21) Application number: 02075203.6
(22) Date of filing: 18.01.2002
(51) Int. Cl.: B62J 6/02

(54) **Lamp**
Lampe
Lampe

(30) Priority: 06.02.2001 NL 1017293
(43) Date of publication of application: 07.08.2002
(73) Proprietor: Spanninga Metaal B.V., 8501 MK Joure (NL)
(72) Inventor: Vallin, Didier, 01260 Belmont-Luthezieu (FR)
(74) Representative: Valkonet, Rutger

(56) References cited:
- EP-A- 0 141 455
- US-A- 6 017 140

## Description

The invention relates to a lamp comprising a housing, a printed circuit board disposed within the housing, which printed circuit board is provided with tracks of a conductive material, as well as a mirror with a light source fitted therein, part of which light source extends into the housing behind the mirror, where it makes contact with a track provided on the printed circuit board.

Such a lamp, which is generally used as a bicycle lamp, is known, for example from European patent application No. 0 0141 455. In this known construction the light source in the form of an incandescent lamp has a threaded portion which is screwed into a hole formed in the mirror or reflector and which is in contact with the printed circuit board with the end that extends behind the mirror.

The object of the invention to obtain a lamp of the above kind, by means of which a simpler construction and a quicker mounting of the lamp can be effected.

According to the invention, this can be accomplished in that the light source is held in position in the housing by a part of the light source which is clamped between the printed circuit board and a part of the mirror that faces towards the printed circuit board.

When using the construction according to the invention, the light source will automatically be clamped down in the correct position upon fitting of the printed circuit board and the mirror or the reflector.

All this can be accomplished in a simple manner while using a compact construction in that the light source is provided with a projecting flange, which is clamped down between the printed circuit board and the part of the mirror that faces towards the printed circuit board.

If the printed circuit board is connected to the mirror, a unit formed by the printed circuit board, the light source and the mirror can be fitted in the housing of the lamp in a quick and simple manner.

The invention will be explained in more detail below by means of an embodiment of a lamp according to the invention which is schematically shown in the accompanying figures.

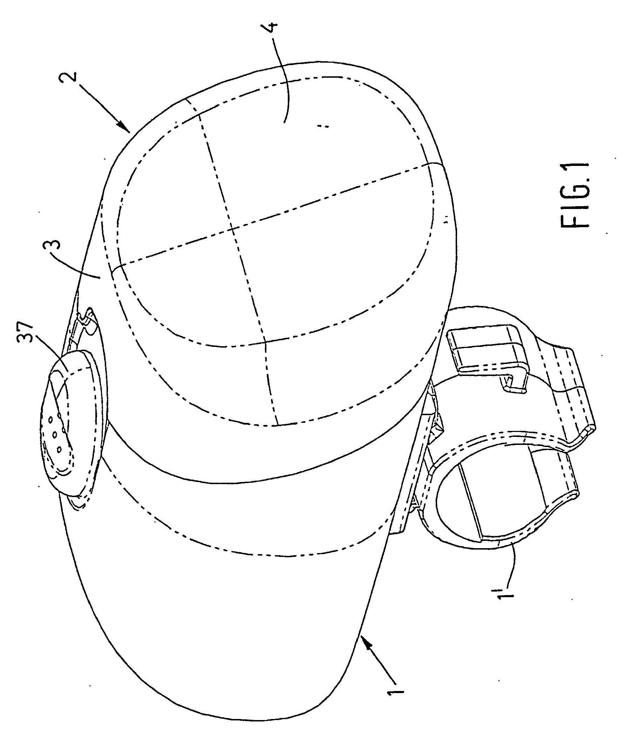

Fig. 1 is a perspective view of a lamp according to the invention.
Fig. 2 is a sectional view of the lamp in that is shown in Fig. 1.
Fig. 3 is a perspective view of parts of the lamp shown in spaced-apart position.
Fig. 4 is a perspective view of the housing of the lamp with the printed circuit board and the light source.
Fig. 5 is a perspective view of a cover of the lamp with a mirror mounted therein and a printed circuit board fixed to the mirror.

The lamp in that is shown in the figures comprises an elongated housing 1, which is open at one end. This open end is closed by a cover 2, which comprises a circular flange 3 and a part 4 which is positioned opposite the mirror or reflector 5 that is mounted in the lamp.

This part 4 will be light-transmitting and it may be formed in one piece with the circular flange 3 or as a separate glass. Fixed to the housing is a support 1', by means of which the lamp can be attached to, for example, the handlebar of a bicycle or the like.

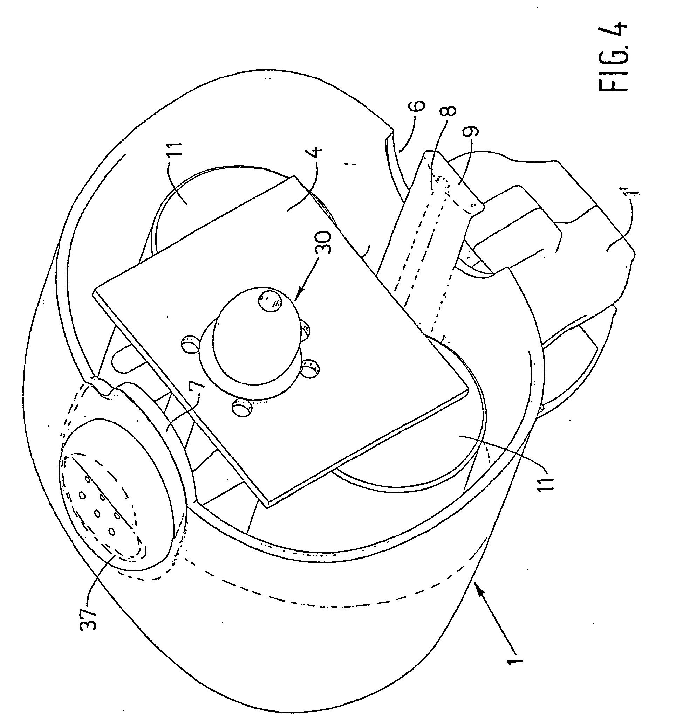

As appears from Fig. 4, a more or less semicircular recess 6 is formed in the wall of the housing 1 near the bottom side of the housing 1, whilst the housing 1 is provided with a projecting nose 7 approximately diametrically opposite thereto. Near the recess 6, the housing is provided with a projecting arm 8, which at its free end includes a hook-shaped portion 9 extending in downward direction.

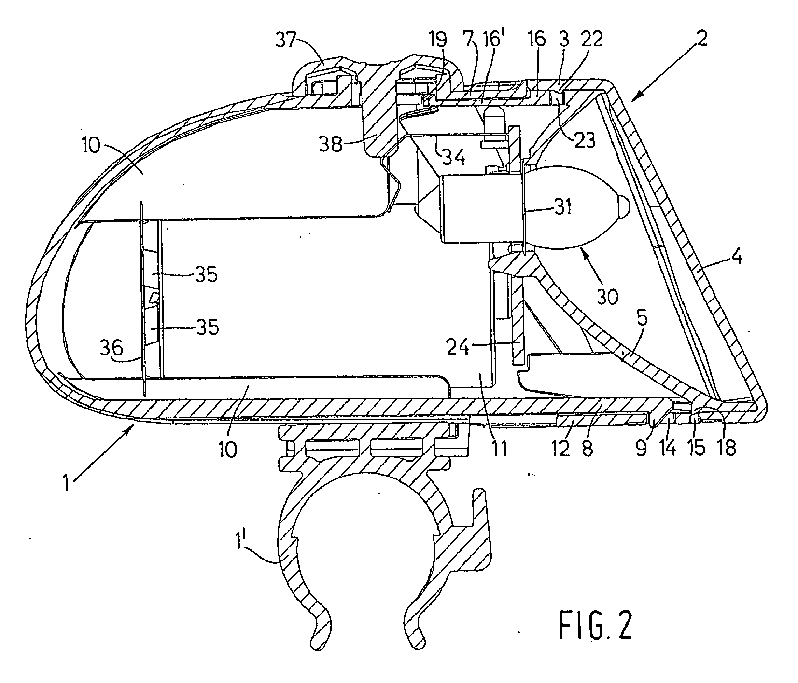

Supporting members 10 (Fig. 2) are furthermore provided in the housing 1 for supporting batteries 11 that are disposed one beside another in the housing.

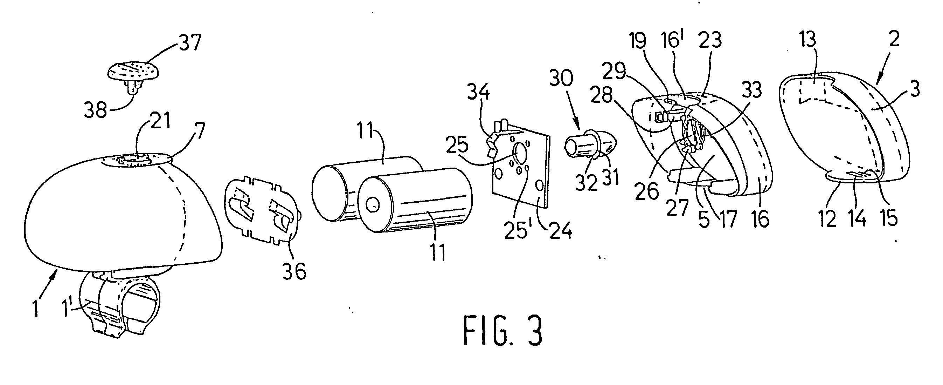

As is apparent in particular from Fig. 3, the circular flange 3 of the cover 2 includes a projecting part 12, which fits in the recess 6 of the housing 1 in the assembled position of the lamp, and a recess 13, in which the projecting part 7 of the housing 1 fits in the assembled position of the lamp.

Two elongated recesses 14 and 15 are furthermore formed in the flange 3, near the projecting part 12 thereof. As will be apparent in particular from Fig. 2, the hook-shaped portion 9 of the arm 8 that is connected to the housing 1 engages in the recess 14 in the assembled position of the lamp.

As further will be apparent in particular from Fig. 3 there has been connected with the mirror or reflector 5 a surrounding flange 16 which in the assembles position of the lamp is substantially surrounded by the flange 3 of the cover 2.

The flange 16 is provided with a recess 17 near its bottom side, seen in the figures, which functions to receive the part of the arm 8 that extends outside the housing 1. Near the end of such recess 17 the flange 16 comprises a protruding nose 18 that in the assembles position of the lamp engages in the recess 15 of the flange 3 of the cover 2.

A shallow recess is formed in the flange 16, near the upper side of said flange, seen in the figures, which recess is bounded by a narrow wall portion 16' of the flange. Arranged on the free edge of said wall portion 16' is an upwardly extending hook-shaped member 19.

As appears in particular from Fig. 2, the projecting part 7 of the housing is positioned above the narrowed wall portion 16' of the flange 16 of the mirror 5 and in the recess 13 of the cover 2 in the assembled position of the lamp. In the assembled position of the various parts, the projecting nose 19 engages in a hole 21 surrounded by an upright flange, which hole is formed in the upper wall of the housing 1, near the projecting part 7, seen in the figures. As furthermore appears from Fig. 2, a projecting nose 22 formed on the inner wall of the flange 3 of the cover 2 engages in a slotted hole 23, which is formed in the flange 16 near the upper side of the flange 16 of the mirror 5, seen in the figures.

The lamp furthermore includes a so-called printed circuit board 24, that is, a plate-shaped element on which tracks of a conductive material are provided in a manner which is known per se.

A hole 25 is formed in this printed circuit board, which hole is in line with a hole 26 formed in the mirror 5 in the assembled position of the lamp. The purpose of the provision of these holes will be explained in more detail below.

The printed circuit board includes five smaller holes 25' surrounding the hole 25, through which pins 27 attached to the mirror 5 extend in the mounted position of the lamp in order to centre the two holes 25 and 26 relative to each other.

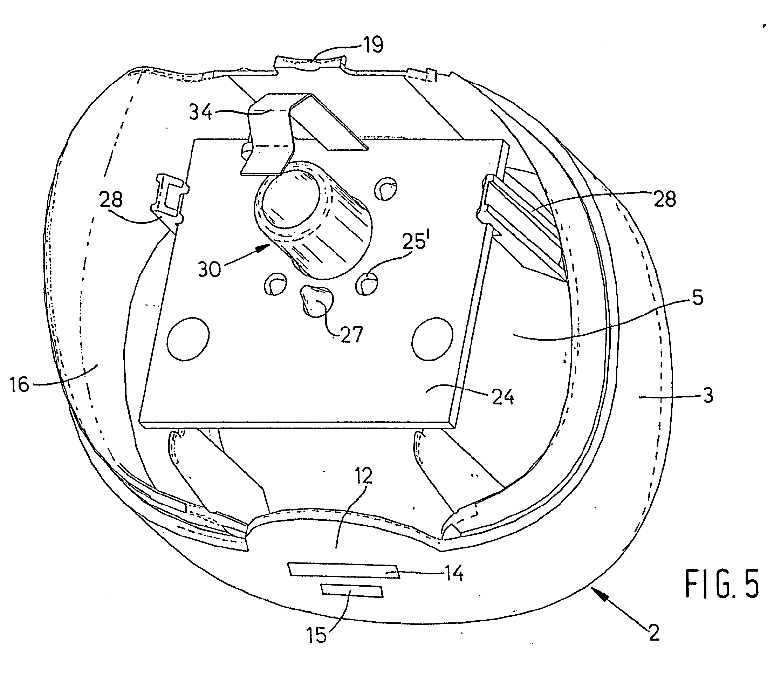

Furthermore, projecting arms 28 are attached to the mirror, in which, as appears from Figs. 3 and 5, notches 29 are formed for receiving longitudinal edges of the printed circuit board 24.

The lamp furthermore comprises a light source 30, which is an incandescent lamp in the illustrated embodiment, which light source is provided with a projecting flange 31 between its ends. A recess 32 is formed in the flange.

As will be apparent from the figures, the incandescent lamp 30 can be inserted through the hole 26 formed in the mirror 5 from the side of the mirror 5 remote from the glass 4; the flange 31 of the incandescent lamp will come to abut against the rear boundary edge 33 of the mirror. The lower projection 27, seen in Fig. 3, whose diameter is slightly larger than that of the other projections, is positioned in the recess 32 in the flange 31 of the incandescent lamp 30, so that the incandescent lamp 30 is locked against rotation. Subsequently, the printed circuit board 4 can be connected to the mirror by pressing the printed circuit board onto the projections 27 in the longitudinal direction of the light source, seen in Fig. 2. The free ends of the arms 28 will move out a little, after which the printed circuit board will snap into slots 29 formed in the arms 28. Since the projections 27 gradually increase in diameter from their end, as appears from the figures, the insertion of projections into holes 25' formed in the printed circuit board will not present any difficulties.

It will be apparent that the flange 31 of the light source 30 will be clamped down between the printed circuit board 4 and the boundary edge 33 of the mirror 5, so that no further means for fixing the light source 30 in the correct position are required, whilst the flange 32 will at the same time come into electrically conducting contact with a track of an electrically conducting material that is provided on the printed circuit board.

As furthermore appears from the figures, a substantially L-shaped switching spring 34 is fixed to the printed circuit board 24 with one of its ends. A supporting plate 36 for the battery 11, which is fitted with contact springs 35, is provided in the housing 1, near the end remote from the open end of the housing 1.

The lamp furthermore includes an operating button 37, which is provided with a projecting pin 38 which extends through the opening 21 that is present in the housing 1 in the assembled position of the lamp for cooperation with the contact spring 34. The pin 38 can be moved in the longitudinal direction of the housing by means of the operating button 37.

As will be apparent from the foregoing, the assembly of the lamp can take place by first combining the cover 4 with the flange 5, the incandescent lamp 30 and the printed circuit board 24 into a unit. To this end, the flange 16 that is connected to the mirror 5 is slid into the flange 3 of the cover 2 that surrounds this flange 16 in the assembled position, whereupon the projection 22 of the cover 2 will snap into the recess 23 that is formed in the flange 16, and the nose 18 that is connected to the mirror 5 will snap into the recess 15 that is formed in the flange 3. Then the incandescent lamp 30 can be passed through the hole 26 that is formed in the mirror 5, after which the printed circuit board 24 will be slid over the projecting parts 27 attached to the mirror 5 whilst clamping down the flange 31 between the printed circuit board 24 and the mirror 5.

Then this unit can be fitted to the open end of the housing 1, whereby the hook-shaped part 19 of the arm 8 that forms part of the housing 1 will snap into the recess 14 formed in the flange 3 of the cover 2 and the hook-shaped part 1 of the flange 16 of the mirror 5 will snap into the opening 21 formed in the housing 1, thus effecting a solid connection between the various parts. The batteries 11 will be retained between the printed circuit board 24 and the contact springs 35, which effect a conducting connection between the batteries 11. The batteries have at the same time been brought into conducting contact with conductive tracks that are present on the printed circuit board 24.

In the position that is shown in Fig. 2, the switching spring 34 is not in contact with the incandescent lamp 31. By moving the operating button 37 to the right, seen in Fig. 2, the pin 38 that is connected to the operating button 37 will move the free end of the spring 34 to the right, seen in Fig. 2, in order to bring this free end into contact with the end of the incandescent lamp 30, as a result of which the incandescent lamp will be ignited.

Of course, additions and/or modifications to the above-described embodiment of the lamp according to the invention are possible within the spirit and scope of the invention.

Thus, an embodiment is conceivable in which the light source can also be fed by means of a usual bicycle dynamo or the like.

Another possibility is an embodiment in which the lamp is not provided with batteries, but in which the light source is exclusively fed by means of a bicycle dynamo or the like, for example. In such a case, one or more supporting means will be provided in the housing for the purpose of supporting the printed circuit board 24 at its side remote from the mirror 5.

## Claims

1. A lamp comprising a housing (1), a printed circuit board (24) disposed within the housing, which printed circuit board is provided with tracks of a conductive material, as well as a mirror (5) with a light source (30) fitted therein, part of which light source extends into the housing behind the mirror, where it makes contact with a track provided on the printed circuit board, **characterized in that** the light source is held in position in the housing by a part (31) of the light source, which is clamped between the printed circuit board and a part (33) of the mirror that faces towards the printed circuit board.

2. A lamp according to claim 1, **characterized in that** said part of the light source is constructed as a projecting flange (31).

3. A lamp according to claim 1 or 2, **characterised in that** the printed circuit board is connected to the mirror.

4. A lamp according to any one of the preceding claims, **characterised in that** projecting parts (27) are formed on the mirror at a side that faces towards the printed circuit board, which parts are accommodated in first recesses (25') formed in the printed circuit board.

5. A lamp according to any one of the preceding claims, **characterised in that** the printed circuit board is retained between the batteries (11) that are accommodated in the lamp and the mirror with the interposition of the clamped-down part (31) of the light source.

6. A lamp according to any one of the preceding claims, **characterised in that** the mirror is provided with a first flange, which is enclosed by a second flange which forms part of a cover of the lamp.

7. A lamp according to claim 6, **characterised in that** the two flanges are interconnected by means of projections snapping into the recesses.

8. A lamp according to claim 6 or 7, **characterised in that** the flange (2) of the cover and the housing are interconnected by means of a snap connection.

9. A lamp according to any one of the claims 6-8, **characterised in that** the flange of the mirror is connected to the housing by means of a snap connection.

## Patentansprüche

1. Lampe, umfassend ein Gehäuse (1), eine im Gehäuse angeordnete gedruckte Leiterplatte (24), welche gedruckte Leiterplatte mit Bahnen eines leitfähigen Materials versehen ist, ebenso wie einen Spiegel (5) mit einer darin angebrachten Lichtquelle (30), von welcher Lichtquelle sich ein Teil in das Gehäuse hinter dem Spiegel erstreckt, wo es einen Kontakt mit einer Bahn bildet, die auf der gedruckten Leiterplatte bereitgestellt ist, **dadurch gekennzeichnet, dass** die Lichtquelle im Gehäuse durch einen Teil (31) der Lichtquelle in Stellung gehalten ist, welcher zwischen der gedruckten Leiterplatte und einem der gedruckten Leiterplatte zugewandten Teil (33) des Spiegels eingeklemmt ist.

2. Lampe nach Anspruch 1, **dadurch gekennzeichnet, dass** der Teil der Lichtquelle als ein vorspringender Flansch (31) gebildet ist.

3. Lampe nach Anspruch 1 oder 2, **dadurch gekennzeichnet, dass** die gedruckte Leiterplatte mit dem Spiegel verbunden ist.

4. Lampe nach einem der voranstehenden Ansprüche, **dadurch gekennzeichnet, dass** vorspringende Teile (27) auf dem Spiegel an einer Seite gebildet sind, die der gedruckten Leiterplatte zugewandt ist, welche Teile in ersten Ausnehmungen (25') aufgenommen sind, die in der gedruckten Leiterplatte gebildet sind.

5. Lampe nach einem der voranstehenden Ansprüche, **dadurch gekennzeichnet, dass** die gedruckte Leiterplatte zwischen den Batterien (11) gehalten ist, die in der Lampe und dem Spiegel aufgenommen sind, wobei der nach unten klammernde Teil (31) der Lichtquelle dazwischen angeordnet ist.

6. Lampe nach einem der voranstehenden Ansprüche, **dadurch gekennzeichnet, dass** der Spiegel mit einem ersten Flansch versehen ist, welcher von einem zweiten Flansch umschlossen ist, welcher Teil einer Abdeckung der Lampe bildet.

7. Lampe nach Anspruch 6, **dadurch gekennzeichnet, dass** die zwei Flansche durch Vorsprünge, die in die Ausnehmungen einschnappen, miteinander verbunden sind.

8. Lampe nach Anspruch 6 oder 7, **dadurch gekennzeichnet, dass** der Flansch (2) der Abdeckung und das Gehäuse mittels einer Schnapp-Verbindung miteinander verbunden sind.

9. Lampe nach einem der Ansprüche 6 bis 8, **dadurch gekennzeichnet, dass** der Flansch des Spiegels mit dem Gehäuse durch eine Schnapp-Verbindung verbunden ist.

## Revendications

1. Lampe comprenant un boîtier (1), une carte de circuit imprimé (24) disposée dans le boîtier, laquelle carte de circuit imprimé est munie de pistes d'un matériau conducteur, ainsi que d'un miroir (5) avec une source lumineuse (30) adaptée dans celui-ci, une partie de ladite source lumineuse s'étendant dans le boîtier derrière le miroir, où elle entre en contact avec une piste positionnée sur la carte de circuit imprimé, **caractérisée en ce que** la source lumineuse est maintenue en place dans le boîtier par une partie (31) de la source lumineuse qui est serrée entre la carte de circuit imprimé et une partie (33) du miroir orientée vers la carte de circuit imprimé.

2. Lampe selon la revendication 1, **caractérisée en ce que** ladite partie de la source lumineuse est construite comme une bride en saillie (31).

3. Lampe selon la revendication 1 ou 2, **caractérisée en ce que** la carte de circuit imprimé est reliée au miroir.

4. Lampe selon l'une quelconque des revendications précédentes, **caractérisée en ce que** des parties en saillie (27) sont formées sur le miroir d'un côté qui est orienté vers la carte de circuit imprimé, lesquelles parties sont logées dans de premiers renfoncements (25') formés dans la carte de circuit imprimé.

5. Lampe selon l'une quelconque des revendications précédentes, **caractérisée en ce que** la carte de circuit imprimé est retenue entre les piles (11) qui sont - logées dans la lampe et le miroir, lors de l'interposition de la partie serrée (31) de la source lumineuse.

6. Lampe selon l'une quelconque des revendications précédentes, **caractérisée en ce que** le miroir est muni d'une première bride, qui est entourée d'une seconde bride qui forme une partie d'un couvercle de la lampe.

7. Lampe selon la revendication 6, **caractérisée en ce que** les deux brides sont interconnectées au moyen de saillies s'emboîtant par pression dans les renfoncements.

8. Lampe selon la revendication 6 ou 7, **caractérisée en ce que** la bride (2) du couvercle et le boîtier sont interconnectés au moyen d'un emboîtement par pression.

9. Lampe selon l'une quelconque des revendications 6 à 8, **caractérisée en ce que** la bride du miroir est reliée au boîtier au moyen d'un emboîtement par pression.
